# EUROPÄISCHE PATENTSCHRIFT

(11) **EP 0 831 702 B1**
(45) Veröffentlichungstag und Bekanntmachung des Hinweises auf die Patenterteilung: **01.09.1999**
(21) Anmeldenummer: 96918663.4
(22) Anmeldetag: 03.06.1996
(51) Int. Cl.: A01N 43/30

(54) **FUNGIZIDE WIRKSTOFFKOMBINATIONEN**
COMBINATIONS OF ACTIVE FUNGICIDAL AGENTS
COMBINAISONS DE SUBSTANCES ACTIVES FONGICIDES

(30) Priorität: 08.06.1995 DE 19520935
(43) Veröffentlichungstag der Anmeldung: 01.04.1998
(73) Patentinhaber: BAYER AG, 51368 Leverkusen (DE)
(72) Erfinder: DUTZMANN, Stefan, D-40721 Hilden (DE); SIEBERT, Reinhard, D-51467 Bergisch Gladbach (DE); KRÄMER, Wolfgang, D-51399 Burscheid (DE)
(86) Internationale Anmeldenummer: EP9602402
(87) Internationale Veröffentlichungsnummer: WO9641533

(56) Entgegenhaltungen:
- EP-A- 0 393 746
- EP-A- 0 627 163

## Beschreibung

Die vorliegende Erfindung betrifft neue Wirkstoffkombinationen, die aus dem bekannten 8-t-Butyl-2-(N-ethyl-N-n-propylamino)-methy-1,4-dioxaspiro[5,4]decan und zwei weiteren bekannten Triazolyl-Derivaten bestehen und sehr gut zur Bekämpfung von Pilzen geeignet sind.

Es ist bereits bekannt, daß 8-t-Butyl-2-(N-ethyl-N-n-propylamino)-methyl-1,4-dioxaspiro[5,4]decan, 1-(4-Chlorphenyl)-4,4-dimethyl-3-(1,2,4-triazol-1-yl-methyl)-pentan-3-ol (= Tebuconazole) und 2-(2,4-Dichlor-phenyl)-2-(1,2,4-triazol-1-yl-methyl)-4-n-propyl-1,3-dioxolan (= Propiconazole) fungizide Eigenschaften besitzen (vgl. EP-A 0 281 842, EP-A 0 040 345 und DE-A 2 551 560).

Weiterhin ist schon bekannt, daß Mischungen
- aus 8-t-Butyl-2-(N-ethyl-N-n-propylamino)-methyl-1,4-dioxaspiro[5,4]decan und Tebuconazole,
   oder
- aus 8-t-Butyl-2-(N-ethyl-N-n-propylamino)-methyl-1,4-dioxaspiro[5,4]decan und Propiconazole
   oder
- aus Tebuconazole und Propiconazole
zur Bekämpfung von Pilzen eingesetzt werden können (vgl. EP-A 0 393 746 und EP-A 0 627 163).

Sowohl die Wirksamkeit der einzelnen Komponenten als auch der bekannten Mischungen aus jeweils zwei Wirkstoffen ist gut. Bei sehr niedrigen Aufwandmengen läßt die fungizide Potenz allerdings in manchen Fällen zu wünschen übrig.

Es wurde nun gefunden, daß die neuen Wirkstoffkombinationen aus
A) 8-t-Butyl-2-(N-ethyl-N-n-propylamino)-methyl-1,4-dioxaspiro[5,4]-decan der Formel 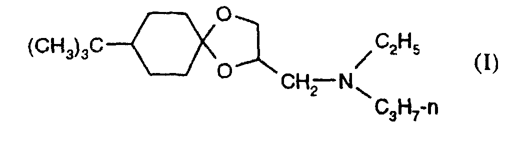 und
B) 1-(4-Chlor-phenyl)-4,4-dimethyl-3-(1,2,4-triazol-1-yl-methyl)-pentan-3-ol der Formel 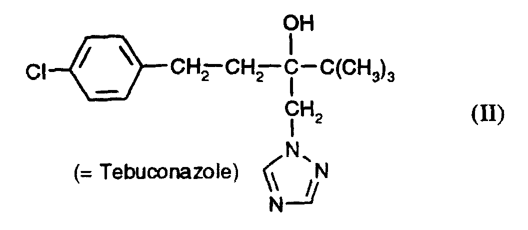 und
C) 2-(2,4-Dichlor-phenyl)-2-(1,2,4-triazol-1-yl-methyl)-4-n-propyl-1,3-dioxolan der Formel 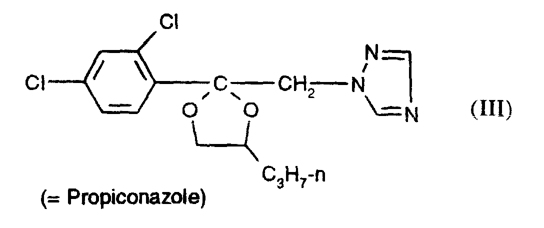 sehr gute fungizide Eigenschaften besitzen.

Überraschenderweise ist die fungizide Wirksamkeit der erfindungsgemäßen Kombinationen aus drei Wirkstoffen wesentlich höher als die Wirkungen der einzelnen Komponenten bzw. die Wirkungen der vorbekannten Mischungen aus jeweils zwei Wirkstoffen. Es liegt also ein nicht vorhersehbarer, echter synergistischer Effekt vor und nicht nur eine Wirkungsergänzung.

Die in den erfindungsgemäßen Wirkstoffkombinationen enthaltenen Wirkstoffe und auch die aus diesen Komponenten möglichen Kombinationen aus jeweils zwei Wirkstoffen sind bekannt (vgl. EP-A 0 281 842, EP-A 0 040 345, DE-A 2 551 560, EP-A 0 393 796 und EP-A 0 627 163). Die Wirkstoffe der Formeln (II) und (III) können auch in Form von Säureadditions-Salzen eingesetzt werden.

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im allgemeinen entfallen auf 1 Gewichtsteil an Wirkstoff der Formel (I) 0,1 bis 1,5 Gewichtsteile, vorzugsweise 0,1 bis 1,2 Gewichtsteile an Wirkstoff der Formel (II) und 0,1 bis 1,5 Gewichtsteile, vorzugsweise 0,1 bis 1,2 Gewichtsteile an Wirkstoff der Formel (III).

Die erfindungsgemäßen Wirkstoffkombinationen besitzen sehr gute fungizide Eigenschaften und lassen sich zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Beispielhaft aber nicht begrenzend seien einige Erreger von pilzlichen und bakteriellen Erkrankungen, die unter die oben aufgezählten Oberbegriffe fallen, genannt:
Xanthomonas-Arten, wie Xanthomonas oryzae;
Pseudomonas-Arten, wie Pseudomonas lachrymans;
Erwinia-Arten, wie Erwinia amylovora;
Pythium-Arten, wie Pythium ultimum;
Phytophthora-Arten, wie Phytophthora infestans;
Pseudoperonospora-Arten, wie Pseudoperonospora humuli oder Pseudoperonospora cubensis;
Plasmopara-Arten, wie Plasmopara viticola;
Peronospora-Arten, wie Peronospora pisi oder P. brassicae;
Erysiphe-Arten, wie Erysiphe graminis;
Sphaerotheca-Arten, wie Sphaerotheca fuliginea;
Podosphaera-Arten, wie Podosphaera leucotricha;
Venturia-Arten, wie Venturia inaequalis;
Pyrenophora-Arten, wie Pyrenophora teres oder P. graminea;
(Konidienform: Drechslera, Syn: Helminthosporium);
Cochliobolus-Arten, wie Cochliobolus sativus;
(Konidienform: Drechslera, Syn: Helminthosporium);
Uromyces-Arten, wie Uromyces appendiculatus;
Puccinia-Arten, wie Puccinia recondita;
Tilletia-Arten, wie Tilletia caries;
Ustilago-Arten, wie Ustilago nuda oder Ustilago avenae;
Pellicularia-Arten, wie Pellicularia sasakii;
Pyricularia-Arten, wie Pyricularia oryzae;
Fusarium-Arten, wie Fusarium culmorum;
Botrytis-Arten, wie Botrytis cinerea;
Septoria-Arten, wie Septoria nodorum;
Leptosphaeria-Arten, wie Leptosphaeria nodorum;
Cercospora-Arten, wie Cercospora canescens;
Alternaria-Arten, wie Alternaria brassicae;
Pseudocercosporella-Arten, wie Pseudocercosporella herpotrichoides.

Die erfindungsgemäßen Wirkstoffkombinationen eignen sich besonders gut zur Bekämpfung von Getreidekrankheiten, wie Pyrenophora teres, Erysiphe graminis, Leptosphaeria nodorum, Rhynchosporium secalis, Septoria tritici, Puccinia spp., Fusarium spp. und Cochliobolus sativus.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens.

Die Wirkstoffkombinationen können in die üblichen Formulierungen überführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxy-methylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

In den Formulierungen können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent an Wirkstoffen, vorzugsweise zwischen 0,5 und 90 %.

Die erfindungsgemäßen Wirkstoffkombinationen können in den Formulierungen in Mischung mit anderen bekannten Wirkstoffen vorliegen, wie Fungizide, Insektizide, Akarizide und Herbizide, sowie in Mischungen mit Düngemitteln oder Pflanzenwachstumsregulatoren.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden.

Die Anwendung geschieht in üblicher Weise, z.B. durch Gießen, Verspritzen, Versprühen, Verstreuen, Verstreichen, Trockenbeizen, Feuchtbeizen, Naßbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g, benötigt.

Bei Behandlung des Bodens sind Wirkstoffkonzentrationen von 0,00001 bis 0,1 Gew.-%` vorzugsweise von 0,0001 bis 0,02 Gew.-%, am Wirkungsort erforderlich.

Die gute fungizide Wirkung der erfindungsgemäßen Wirkstoffkombinationen geht aus den nachfolgenden Beispielen hervor. Während die einzelnen Wirkstoffe und auch die Kombinationen aus jeweils zwei Wirkstoffen in der fungiziden Wirkung Schwächen aufweisen, zeigen die Kombinationen aus drei Wirkstoffen eine Wirkung, die über eine einfache Wirkungssummierung und auch über die Wirkung der bekannten Kombinationen mit synergistischem Effekt hinausgeht.

Ein synergistischer Effekt liegt bei Fungiziden immer dann vor, wenn die fungizide Wirkung der Wirkstoffkombinationen größer ist als die Summe der Wirkungen der einzeln applizierten Wirkstoffe.

Die Verwendung der erfindungsgemäßen Wirkstoffkombinationen geht aus den folgenden Beispielen hervor.

### Beispiel 1

### Leptosphaeria nodorum-Test (Weizen) / protektiv

Zur Herstellung einer zweckmäßigen Wirkstoffzubereitung werden handelsübliche Wirkstoff-Formulierungen mit Wasser auf die jeweils gewünschte Konzentration verdünnt.

Zur Prüfung auf protektive Wirksamkeit besprüht man junge Pflanzen mit der Wirkstoffzubereitung in der angegebenen Aufwandmenge.

Nach Antrocknen des Spritzbelages werden die Pflanzen mit einer Sporensuspension von Leptosphaeria nodorum besprüht. Die Pflanzen verbleiben 48 Stunden bei 20°C und 100 % relativer Luftfeuchtigkeit in einer Inkubationskabine.

Die Pflanzen werden in einem Gewächshaus bei einer Temperatur von ca. 15°C und einer relativen Luftfeuchtigkeit von ca. 80 % aufgestellt.

10 Tage nach der Inokulation erfolgt die Auswertung. Dabei bedeutet 0 % einen Wirkungsgrad, der demjenigen der Kontrolle entspricht, während ein Wirkungsgrad von 100 % bedeutet, daß kein Befall beobachtet wird.

Wirkstoffe, Aufwandmengen und Versuchsergebnisse gehen aus der folgenden Tabelle hervor.

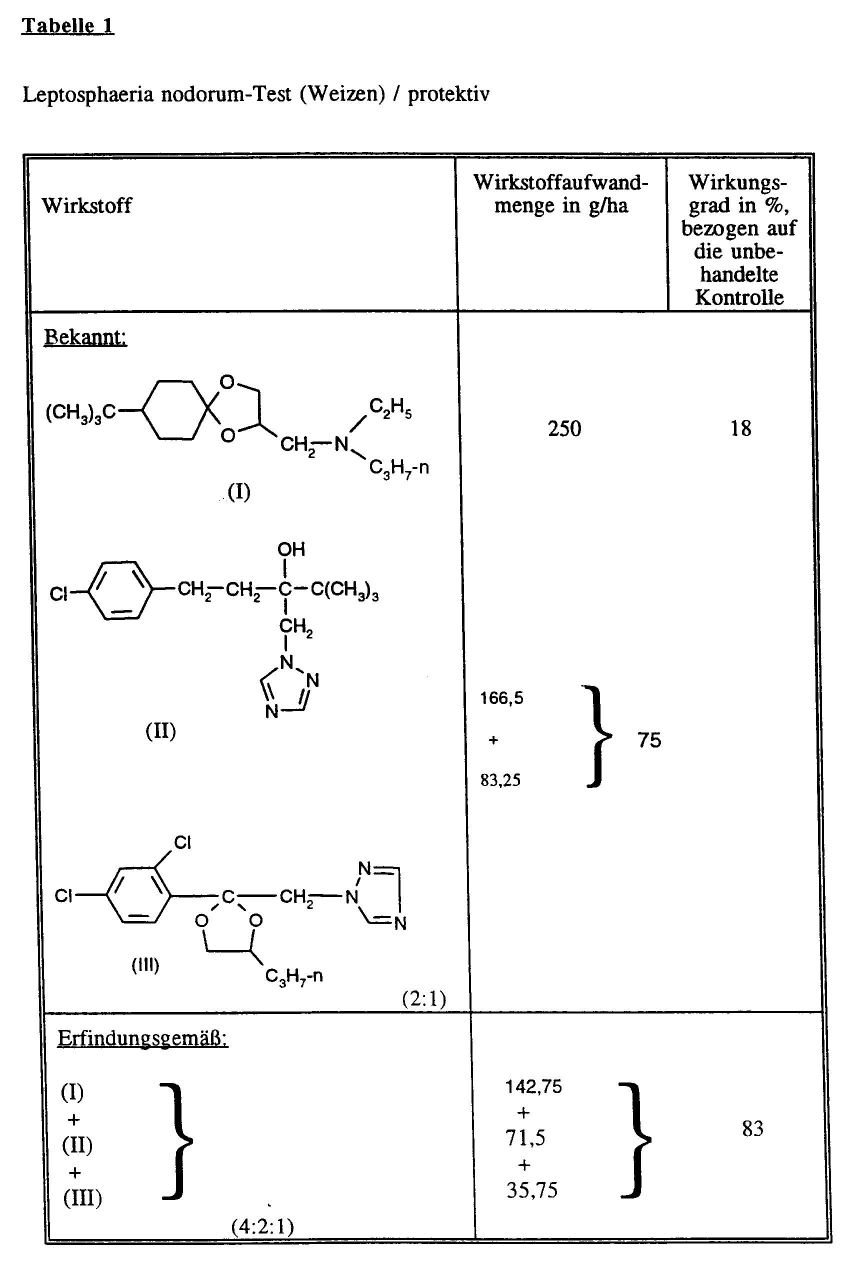

### Beispiel 2

### Fusarium nivale (var. nivale) - Test (Weizen) / protektiv

Zur Herstellung einer zweckmäßigen Wirkstoffzubereitung werden Wirkstoff-Fertigformulierungen mit Wasser auf die jeweils gewünschte Konzentration verdünnt.

Zur Prüfung auf protektive Wirskamkeit besprüht man junge Pflanzen mit der Wirkstoffzubereitung in der angegebenen Aufwandmenge.

Nach Antrocknen des Spritzbelages werden die Pflanzen mit einer Konidiensuspension von Fusarium nivale var. nivale besprüht.

Die Pflanzen werden in einem Gewächshaus unter lichtdurchlässigen Inkubationshauben bei einer Temperatur von ca. 15°C und einer relativen Luftfeuchtigkeit von ca. 100 % aufgestellt.

4 Tage nach der Inokulation erfolgt die Auswertung. Dabei bedeutet 0 % einen Wirkungsgrad, der demjenigen der Kontrolle entspricht, wähbrend ein Wirkungsgrad von 100 % bedeutet, daß kein Befall beobachtet wird.

Wirkstoffe, Aufwandmengen und Versuchsergebnisse gehen aus der folgenden Tabelle hervor.

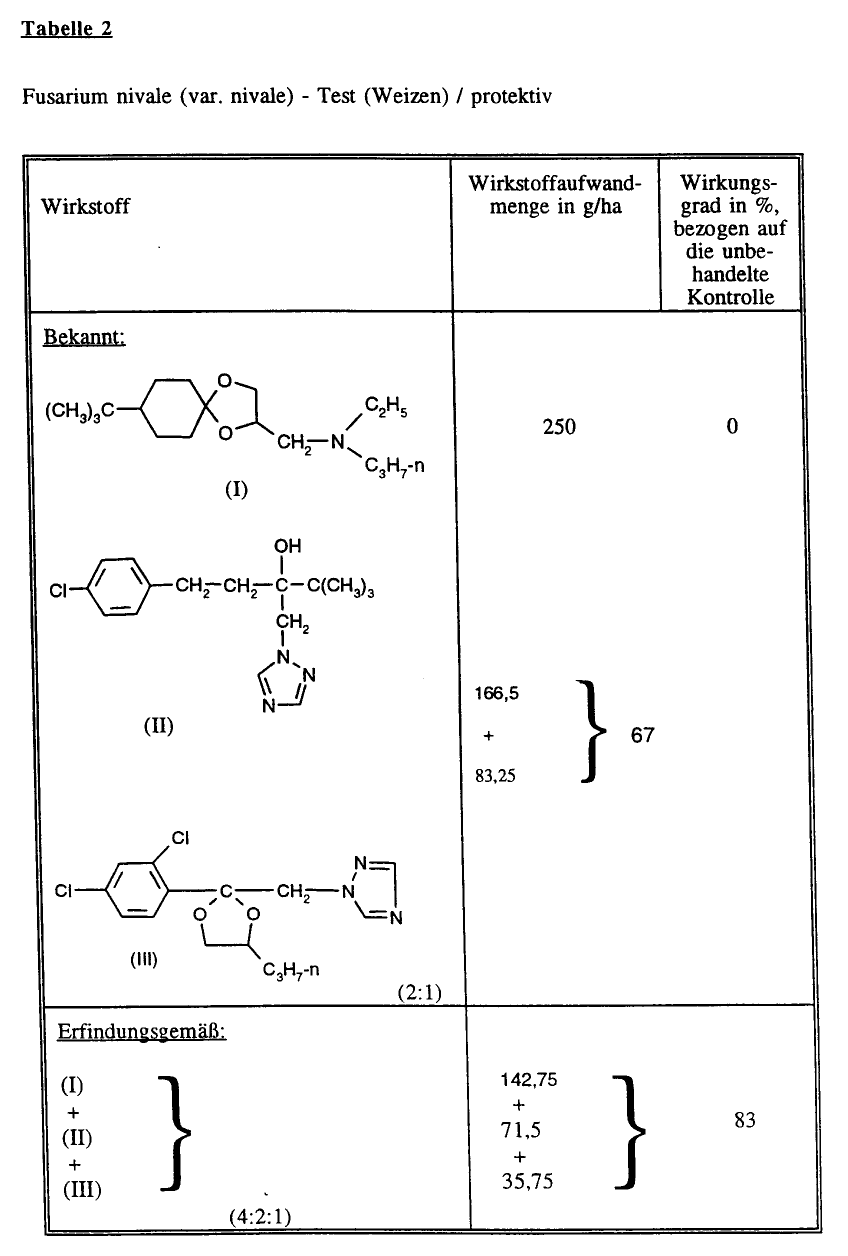

## Patentansprüche

1. Fungizide Mittel mit synergistischer Wirksamkeit, gekennzeichnet durch einen Gehalt an einer Wirkstoffkombination , bestehend aus
A) 8-t-Butyl-2-(N-ethyl-N-n-propylamino)-methyl-1,4-dioxaspiro[5,4]-decan der Formel 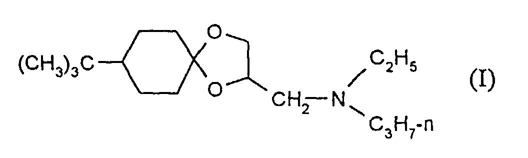 und
B) 1-(4-Chlor-phenyl)-4,4-dimethyl-3-(1,2,4-triazol-1-yl-methyl)-pentan-3-ol der Formel 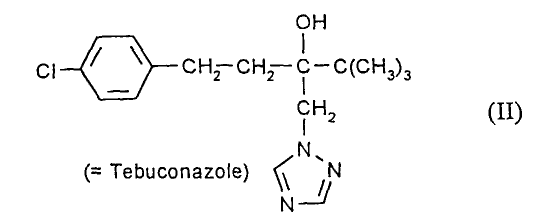 und
C) 2-(2,4-Dichlor-phenyl)-2-(1,2,4-triazol-1-yl-methyl)-4-n-propyl-1,3-dioxolan der Formel 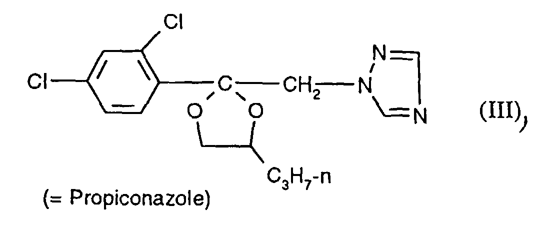 wobei in den Wirkstoffkombinationen das Gewichtsverhältnis von Wirkstoff der Formel (1) zu Wirkstoff der Formel (II) zwischen 1:0,1 und 1:1,5 und zu Wirkstoff der Formel (III) zwischen 1:0,1 und 1:1,5 liegt.

2. Verfahren zur Bekämpfung von Pilzen, dadurch gekennzeichnet, daß man Wirkstoffkombinationen gemäß Anspruch 1 auf die Pilze und/oder deren Lebensraum einwirken läßt.

3. Verwendung von Wirkstoffkombinationen gemäß Anspruch 1 zur Bekämpfung von Pilzen.

4. Verfahren zur Herstellung von fungiziden Mitteln, dadurch gekennzeichnet, daß man Wirkstoffkombinationen gemäß Anspruch 1 mit Streckmitteln und/oder oberflächenaktiven Stoffen vermischt.

## Claims

1. Fungicidal compositions having synergistic activity, characterized by a content of an active compound combination comprising
A) 8-t-butyl-2-(N-ethyl-N-n-propylamino)-methyl-1,4-dioxaspiro-[5,4]decane of the formula 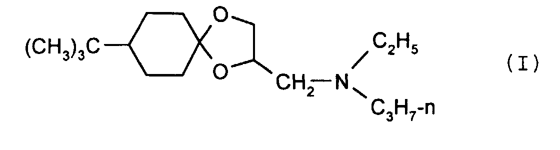 and
B) 1-(4-chlorophenyl)-4,4-dimethyl-3-(1,2,4-triazol-1-yl-methyl)-pentan-3-ol of the formula 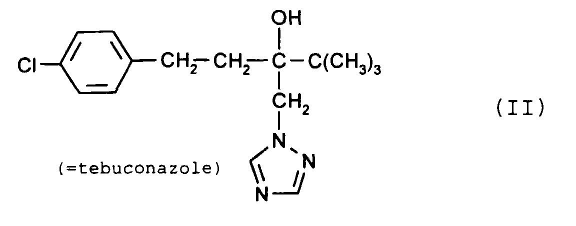 and
C) 2-(2,4-dichloro-phenyl)-2-(1,2,4-triazol-1-yl-methyl)-4-n-propyl-1,3-dioxolane of the formula 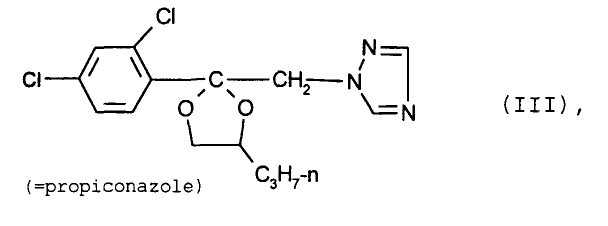 in which active compound combinations the weight ratio of active compound of the formula (I) to active compound of the formula (II) is between 1:0.1 and 1:1.5 and to active compound of the formula (III) is between 1:0.1 and 1:1.5.

2. Method of combating fungi, characterized in that active compound combinations according to Claim 1 are allowed to act on the fungi and/or their environment.

3. Use of active compound combinations according to Claim 1 for combating fungi.

4. Process for the preparation of fungicidal compositions, characterized in that active compound combinations according to Claim 1 are mixed with extenders and/or surface-active substances.

## Revendications

1. Compositions fongicides possédant une activité synergique, caractérisées par une teneur en une combinaison de substances actives consistant en
A) 8-tertio-butyl-2-(N-éthyl-N-n-propylamino)-méthyl-1,4-dioxaspiro[5,4]-décane de formule 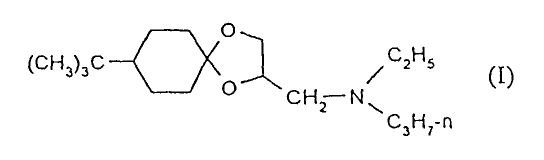 et
B) 1-(4-chlorophényl)-4,4-diméthyl-3-(1,2,4-triazole-1-ylméthyl)-pentane-3-ol de formule 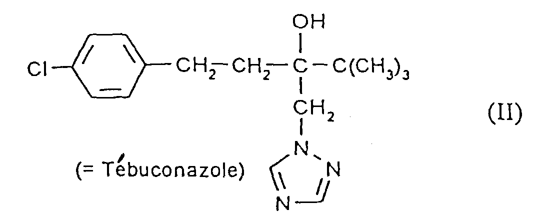 et
C) 2-(2,4-dichlorophényl)-2-(1,2,4-triazole-1-ylméthyl)-4-n-propyl-1,3-dioxolane de formule 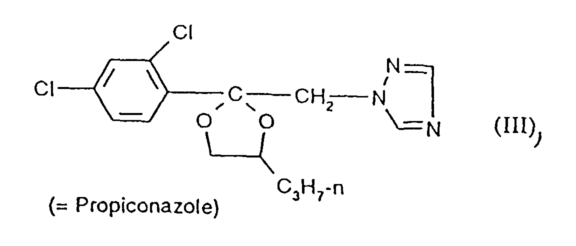 combinaisons de substances actives dans lesquelles le rapport en poids de la substance active de formule (I) à la substance active de formule (II) est de 1:0,1 à 1:1,5 et le rapport en poids de la substance active de formule (I) à la substance active de formule (III) se situe entre 1:0,1 et 1:1,5.

2. Procédé pour combattre des champignons, caractérisé en ce qu'on fait agir sur les champignons et/ou sur leur milieu des combinaisons de substances actives suivant la revendication 1.

3. Utilisation de combinaisons de substances actives suivant la revendication 1 pour combattre des champignons.

4. Procédé de préparation de compositions fongicides, caractérisé en ce qu'on mélange des combinaisons de substances actives suivant la revendication 1 avec des diluants et/ou des agents tensioactifs.
